## Europäisches Patentamt

## European Patent Office

## Office européen des brevets

(11) Veröffentlichungsnummer: **0 292 561**
**A1**

# EUROPÄISCHE PATENTANMELDUNG

veröffentlicht nach Art. 158 Abs. 3 EPÜ

(21) Anmeldenummer: **87902868.6**

(22) Anmeldetag: **29.01.87**

Daten der zugrundeliegenden internationalen Anmeldung:

(86) Internationale Anmeldenummer:
**PCT/SU 87/00015**

(87) Internationale Veröffentlichungsnummer:
**WO 88/03364 (19.05.88 88/11)**

(51) Int. Cl.⁴: **A 01 M 7/00**

(30) Priorität: **12.11.86 SU 4142495**

(43) Veröffentlichungstag der Anmeldung: **30.11.88**
**Patentblatt 88/48**

(84) Benannte Vertragsstaaten: **AT BE CH DE FR GB IT LI NL SE**

(71) Anmelder: **NAUCHNO-PROIZVODSTVENNOE OBIEDINENIE PO SELSKOKHOZYAISTVENNOMU MASHINOSTROENIJU NPO VISKHOM, Dmitrovskoe shosse, 107, Moscow, 127247 (SU)**

(72) Erfinder: **GALKIN, Mikhail Alexandrovich, ul. 800 let Moskvy, 2-1-24, Moscow, 127486 (SU)**
Erfinder: **LIPOV, Jury Noievich, ul. Vavilova, 56-2-167, Moscow, 117296 (SU)**

(74) Vertreter: **Finck, Dieter et al, Patentanwälte v. Füner, Ebbinghaus, Finck Mariahilfplatz 2 & 3, D-8000 München 90 (DE)**

(54) **VORRICHTUNG ZUM BEHANDELN VON SPALIERPFLANZEN IN FREISTEHENDEN WÄRMEHÄUSERN.**

(57) Die Anlage zur Behandlung von Spalierpflanzen enthält einen in Standweiten auf Führungen bewegbaren Geräteträger mit einem elektrischen Antrieb und einer Steuerwelle (6), an dessen Plattform (1) eine Sprühvorrichtung (13), eine Einheit (14) zur automatischen Steuerung der Geräteträgerfahrt und der Arbeit der Sprühvorrichtung (13) und Trommeln (7 und 9) mit einem elektrischen Speisekabel (8) bzw. einem Schlauch (10) für die Behandlungsflüssigkeit montiert sind, welche Trommeln gesonderten Wellen (18 und 19) unabhängig voneinander und mit unterschiedlicher Drehzahl drehbar gelagert sind. Die Einrichtungen (11 und 12) zum Verlegen des Kabels (8) und des Schlauches (10) auf den jeweiligen Trommeln (7 und 9) sind mit diesen synchron drehbar angeordnet.

ANLAGE ZUR BEHANDLUNG VON SPALIERPFLANZEN IN
BLOCK-TREIBHÄUSERN

Technisches Gebiet

Die Erfindung bezieht sich auf das Gebiet des Landmaschinenbaues, insbesondere auf eine Anlage zur Behandlung von Spalierpflanzen in Block-Treibhäusern mit Wasser, Pestizidlösungen oder flüssigen Düngemitteln.

Zugrundeliegender Stand der Technik

Bekannt ist eine Anlage zur Behandlung von Spalierpflanzen in Block-Treibhäusern, die einen Geräteträger mit Arbeitsorganen, einer Trommel mit einem Schlauch zur Zuführung der Behandlungsflüssigkeit, und eine Einrichtung zum Schlauchverlegen auf der Trommel enthält (SU, A 55 745). Diese Anlage hat jedoch einen komplizierten Aufbau, große Abmessungen und einen hohen Metallaufwand und demzufolge eine niedrige Betriebszuverlässigkeit.

Die komplizierte Konstruktion dieser Anlage besteht darin, daß zur Schlauchaufwicklung eine Trommel aus zwei Zylindern verwendet ist, die einer in dem anderen angeordnet sind, wobei der Schlauch zunächst auf den inneren Zylinder und dann auf den äußeren aufgewickelt wird. Dieser Aufbau ergibt auch einen wesentlich komplizierten Trommelantrieb und die Notwendigkeit, die Trommel vertikal anzuordnen, wodurch deren Befestigung an der Wagenplattform erschwert wird. Eben diese konstruktive Ausführung der wichtigsten Baugruppe (Trommel zur Aufwicklung des Wasserzuführungsschlauches) bedingt größere Abmessungen der gesamten Vorrichtung und einen höheren Metallaufwand.

Die Ausbildung der Trommel aus zwei Zylindern, ihre komplizierte gegenseitige Befestigung, der sperrige und komlizierte Antrieb sowohl für die eigentliche Trommel als auch für die Einrichtung zum Schlauchverlegen auf der Trommel ergeben eine geringe Betriebszuverlässigkeit der Anlage.

Bekannt ist weiterhin eine Anlage, die einen Geräteträger mit elektrischem Antrieb und darauf montiert

- 2 -

Arbeitsorgane, eine Steuerwelle (zur Verteilung des Drehmomentes), koaxiale Trommeln mit einem Speisekabel und einem Schlauch zur Zuführung der Betriebsflüssigkeit, Einrichtungen zum Verlegen der letzteren auf den Trommeln und eine Einheit zur automatischen Steuerung des Betriebes und der Fahrt enthält (Abhandlungen des Allunions-Instituts zum Fernstudium auf dem Gebiet der Landwirtschaft "Avtomatizatsia tekhnologicheskikh protsessov vozdelyvania ovoschnykh kultur v zaschischennom grunte (Automatisierte technologische Prozesse bei Gemüseanbau auf Flächen unter Glas)", Heft 144, Moskau, 1977, S. 81 bis 84, Artikel von M.A.Gakjub "Avtomatizatsia protsessa opryskivania v blochnykh teplitsakh /Automatisierter Spritzvorgang in Block-Treibhäusern/"

Diese Anlage hat jedoch auch eine geringe Zuverlässigkeit beim Betrieb und der Ausführung des technologischen Prozesses, einen sperrigen Aufbau und einen hohen Metallaufwand. Das hat folgende Gründe.

Die Kabel-und die Schlauchtrommel sind auf einer gemeinsamen Welle gelagert und haben in diesem Zusammenhang die gleiche Drehzahl. Da aber der Schlauch und das Kabel unterschiedliche Durchmesser aufweisen, wird - wenn sie in mehreren Reihen auf den Trommeln verlegt werden - während des Betriebs entweder der eine (unzulässigerweise) stark gespannt oder der andere schlagartig entspannt. Dadurch kam es zu ihren Brüchen und ungleichmäßiger Verlegung, was die Zuverlässigkeit bei der Ausführung des technologischen Prozesses besonders im automatischen Betrieb beeinträchtigte.

Während des Betriebes werden bei der Fahrt der Anlage von den Entnahmequellen der Behandlungsflüssigkeit der Schlauch und das Speisekabel von ihren Trommeln unter Eigenspannung abgehaspelt und - wenn kurzzeitig angehalten oder die Fahrtgeschwindigkeit z.B. durch Fahren auf unebener Fläche oder Auffahren auf ein Hindernis verringert wird - Schleifen gebildet und der Schlauch und das Kabel unmittelbar auf den Trommeln verwickelt, was zum Kabel- oder Schlauchbruch führen kann.

Der Antrieb der Wellen von Trommeln und Verlegeeinrichtungen ist bei der erwähnten Anlage sperrig, ineffektiv und metallaufwendig. Die Breite der Anlage überschreitet dadurch die festgelegte Standweite der zu behandelnden Pflanzen (von 0,5 bis 0,7 m), wodurch die letzteren beschädigt werden. Der große Metallaufwand erschwert die Bedienung, weil das Gewicht der Anlage die von der Sicherheitstechnik her zulässigen Normen übersteigt.

Unrationell ist auch die Befestigung der Einrichtungen zum Kabel- und Schlauchverlegen am Geräteträger, wodurch die Abmessungen und der Metallaufwand der Konstruktion ebenfalls beeinträchtigt werden.

Die Verlegeeinrichtungen und die Welle der Schlauch- und der Kabeltrommel werden an der Geräteträgerplattform mittels individueller Lager befestigt, was räumliche gegenseitige Verschiebung dieser Baugruppen bei der Montage hervorrufen kann, was seinerseits zum ungleichmäßigen Schlauch- und Kabelverlegen führen und die Betriebszuverlässigkeit der gesamten Anlage entsprechend verringern wird.

Offenbarung der Erfindung

Der vorliegenden Erfindung liegt die Aufgabe zugrunde, eine Anlage zur Behandlung von Spalierpflanzen in Block-Treibhäusern zu schaffen, bei der die bauliche Ausführung ihrer Einrichtungenes es erlauben wird, die Zuverlässigkeit bei der Ausführung des technologischen Prozesses Pflanzenbehandlung zu erhöhen und zu vermeiden, daß Kabel und Schlauch Schleifen bilden, und sich verwickeln, wenn sie auf Trommeln auf- oder von diesen abgewickelt werden.

Die gestellte Aufgabe wird dadurch gelöst, daß bei der Anlage zur Behandlung von Spalierpflanzen in Block-Treibhäusern, die einen in den Standweiten auf Führungen bewegbaren Geräteträger mit einem elektrischen

00292561

- 4 -

Antrieb und einer Steuerwelle und auf dessen Plattform montiert eine Sprühvorrichtung, Trommeln mit einem
Speisekabel bzw. einem Schlauch für die Behandlungsflüssigkeit, Einrichtungen zum Kabel- und Schlauchverlegen auf den jeweiligen Trommeln und eine Einheit zur
automatischen Steuerung der Geräteträgerfahrt und der
Arbeit der Sprühvorrichtung enthält, erfindungsgemäß die
Trommeln auf gesonderten Wellen gelagert sind, die mit
der Steuerwelle mit Möglichkeit kinematisch verbunden
sind, die Drehung auf die Trommeln mit unterschiedlicher
Drehzahl und unabhängig voneinander zu übertragen, wobei
die Einrichtungen zum Kabel- und Schlauchverlegen mit
der Steuerwelle kinematisch verbunden und so ausgebildet
sind, daß ihre Wellen synchron mit dem Umlauf der jeweiligen Trommeln drehbar sind.

Zweckmäßigerweise wird die Steuerwelle mit einer
Reibvorrichtung zur Übertragung unabhängiger Drehung auf
die Trommeln ausgebildet, welche Vorrichtung elektromagnetische Reibungskupplungen enthält, bei jeder von
denen die Nabe an der Welle befestigt ist, während die
Scheiben mittels eines Nockenkettensternes und eines
Kettentriebes mit der Welle der jeweiligen Trommel und
der Verlegeeinrichtung verbunden sind.

Die Lagerung der Trommeln auf den gesonderten Wellen ermöglicht ein zuverlässiges und gleichmäßiges Verlegen des Schlauches und des Kabels, die unterschiedliche Durchmesser haben, wodurch wiederum zur Erhöhung
der Leistung der Anlage durch Vermeiden von Ausfällen
wegen falscher Schlauch- und Kabelverlegung beigetragen
wird.

Die unabhängige kinematische Verbindung der Trommelwellen mit den Wellen der Verlegeeinrichtungen und
der Steuerwelle mit durch die auf der Steuerwelle gelagerten elektromagnetischen Reibungskupplungen ermöglichter unterschiedlicher Drehzahl gewährleistet
eine hohe Betriebszuverlässigkeit dieser Baugruppen und

00292561

- 5 -

trägt dementsprechend zur erhöhten Leistung der gesamten Anlage bei.

Die Ausbildung der Reibvorrichtung als elektromagnetische Reibungskupplungen, die an den entgegengesetzten Enden der Steuerwelle gelagert sind, trägt zur baulichen Vereinfachung des Trommelantriebes und dessen automatischer Steuerung bei sowie ermöglicht eine platzsparende gegenseitige Anordnung der Baugruppen, was swinerseits zur Verringerung des Metallaufwandes und der Abmessungen der Anlage im ganzen beiträgt.

Die Wellen der Verlegeeinrichtungen können mittels büchsen und Böcke auf den Stützen der Trommelwellen montiert werden, was eine gleichmäßigere Kabel- und Schlauchverlegung auf den Trommeln und somit eine erhöhte Betriebszuverlässigkeit ermöglicht. Dies trägt auch zur Gedrungenheit der Anlage im ganzen und zur Verringerung ihres. Metallaufwandes und ihrer Abmessungen bei.

bei der Anlage wird jede Trommel zweckmäßigerweise mit einer Bremseinrichtung ausgeführt, die als elastische Rolle ausgebildet ist, welche mit der Oberfläche der Trommel in Berührung steht und auf einer an der Wellenstütze dieser Trommel befestigten, zur Trommel hin abgefederten Achse drehar befestigt ist, wobei die elastische Rolle aus porösem Gummi besteht. Das wird erlauben, die Bildung der Kabel- und Schlauchschleifen um die Trommeln zu vermeiden, was seinerseits eventuelle Verkeilungen der letzteren und die Ausfälle der gesamten Anlage verhindert.

Die Herstellung der elastischen Rollen aus porösem Gummi trägt zur baulichen Vereinfachung der Bremseirictungen und deren zuverlässigem Betrieb bei.

Die erwähnten Unterschiede im Vergleich zur bekannten Anlage erlauben, die Betriebssicherheit sämtlicher Baugruppen und somit die Leistung der Anlage und die Zuverlässigkeit bei der Ausführung des technologischen Prozesses zu erhöhen. Dabei werden auch Abmessungen, Metallaufwand und Kosten der Konstruktion verringert.

- 6 -

Kurze Beschreibung der Zeichnungen

Nachstehend wird die Erfindung durch eingehende Beschreibung eines Ausführungsbeispiels der erfindungsgemäßen Anlage unter Hinweisen auf beigelegte Zeichnungen näher erläutert, in denen es zeigen:

Fig.1 eine Gesamtansicht der Anlage zur Behandlung von Spalierpflanzen in schematischer Darstellung;

Fig.2 das gleiche wie in Fig.1 in Draufsicht;

Fig.3 einen Schnitt nach Linie III-III in Fig.1;

Fig.4 einen Schnitt nach Linie IV-IV in Fig.2;

Fig.5 einen Schnitt nach Linie V-V in Fig.2.

Beste Ausführungsform der Erfindung

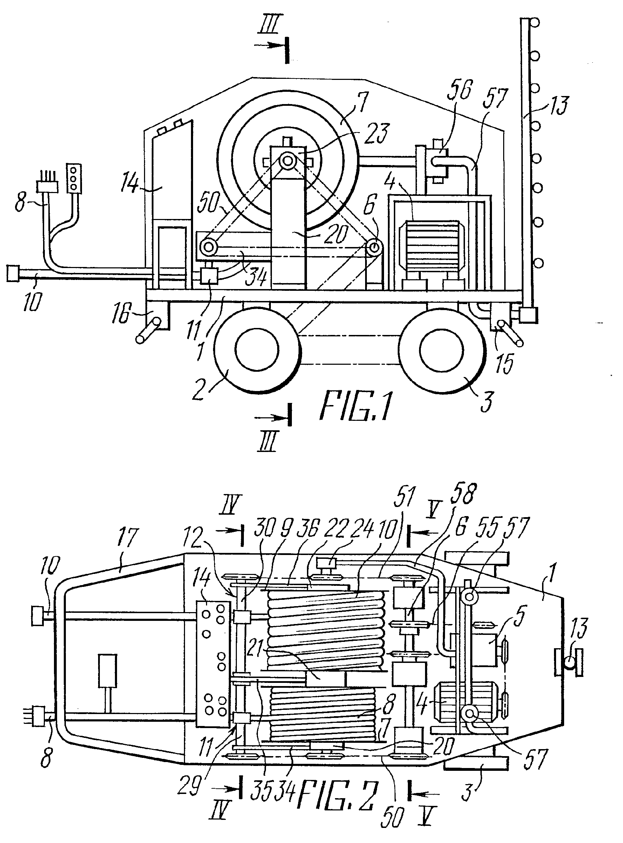

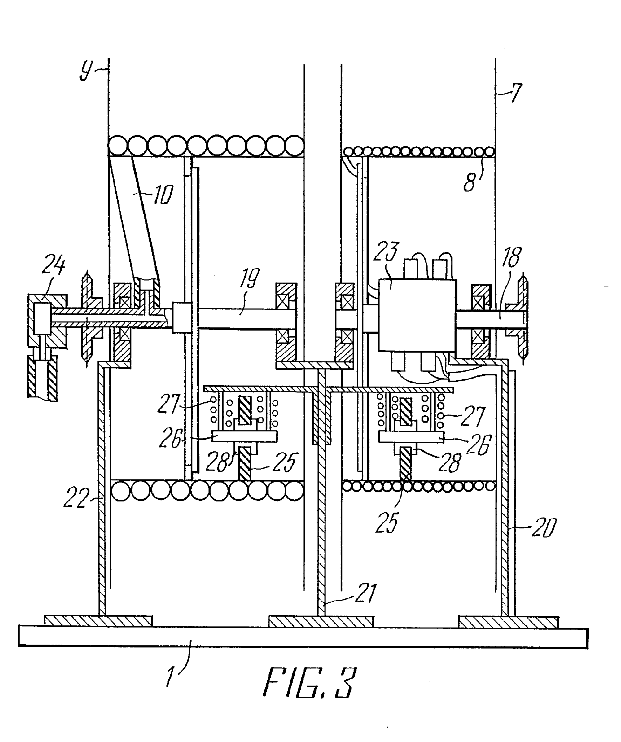

Die Anlage zur Behandlung von Spalierpflanzen enthält einen Geräteträger, der eine Plattform 1 (Fig.1, 2) und zwei Radpaare aus Rädern 2 und 3 aufweist, die von einem elektrischen Motor 4 über ein Getriebe 5 (Fig.2) und eine Steuerwelle 6 angetrieben werden. Der Geräteträger fährt auf in den Standweiten verlegten Führungen, als welche Rohre der oberirdischen Bodenheizung anwendbar sind. Auf der Plattform des Geräteträgers 1 sind auch eine Trommel 7 mit einem elektrischen Speisekabel 8, eine Trommel 9 mit einem Schlauch 10 zur Zuführung der Behandlungsflüssigkeit, Einrichtungen 11 und 12 zum Verlegen des Kabels und des Schlauches auf den entsprechenden Trommeln 7 und 9, eine Sprühvorrichtung 13, eine Einheit 14 zur automatischen Steuerung der Arbeit der Sprühvorrichtung 13 und der Geräteträgerfahrt, Endschalter 15 bzw. 16 zum Umsteuern des elektrischen Motors bzw. zu dessen Ausschalten und ein Griff 17 montiert, mit welchem die Bedienungsperson die Anlage von einer Standweite zur anderen fährt.

Die Trommeln 7 (Fig.3) und 9 sind auf je einer gesonderten Welle 18 und 19 gelagert, die auf der Geräteträgerplattform mittels Stützen 20, 21 und 22 befestigt werden, wobei die Stütze 21 gemeinsam für die beiden Wellen 18 und 19 ist.

Auf der Welle 18 der das Kabel 8 tragenden Trommel 7

ist ein Trommel-Stromabnehmer 23 zur Wegnahme der Spannung von den Adern des zusammen mit der Trommel umlaufenden Kabels 8 und deren weiteren Zuführung zur Einheit 14 zur automatischen Steuerung angeordnet.

Die Welle 19 der Trommel 9 ist hohl ausgebildet. An ihren Hohlraum ist mit seinem einen Ende der Schlauch 10 angeschlossen. Das Ende der Welle 19 ist hohlraumseitig in einem hohlen Gehäuse 24 drehbar gelagert, das mit der Sprühvorrichtung 13 über einen Stutzen in Verbindung steht.

Innerhalb der Trommeln 7 und 9 sind Bremseinrichtungen angeordnet, die aus elastischen Rollen 25, Achsen 26 bestehen, die gegen die innere Oberfläche der Trommeln durch Federn 27 abgefedert sind. Die Rollen 25 sind auf den Achsen 26 mittels Büchsen 28 angebracht, die aus einem Werkstoff mit guten Leiteigenschaften gefertigt sind. Die Achsen 26 sind an der Stütze 21 befestigt.

Die Einrichtungen 11 und 12 (Fig.2) zum Verlegen des Kabels bzw. des Schlauches sind mit der Steuerwelle 6 kinematisch verbunden und so ausgebildet, daß ihre Wellen synchron mit dem Umlauf der jeweiligen Trommel drehbar sind.

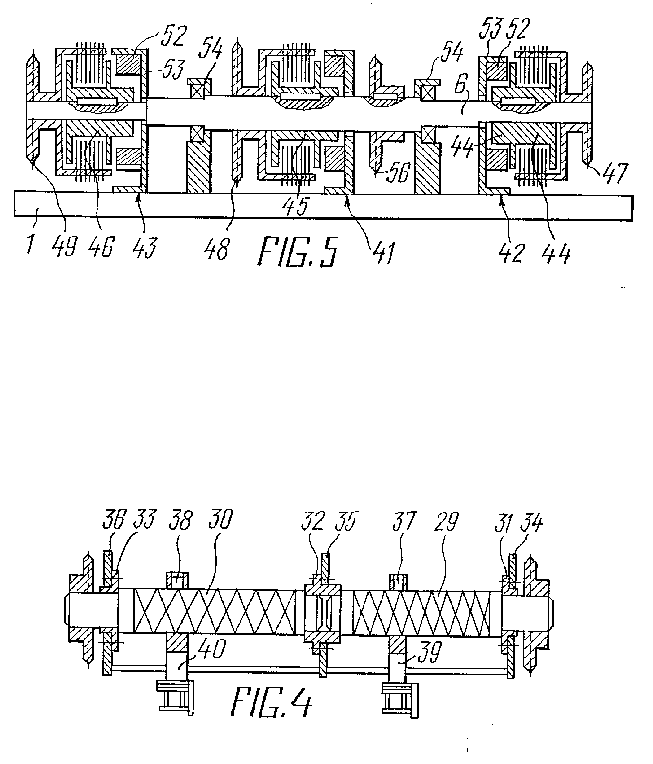

Die Einrichtungen 11 und 12 zum Verlegen des Kabels 8 oder des Schlauches 10 auf der Trommel 7 bzw. 9 bestehen aus je einer Welle 29 (Fig.4) und 30 mit doppelseitigen Schraubenwildungen, die sich in Büchsen 31, 32 und 33 drehen, welche in Böcken 34, 35 und 36 gelagert sind. Die Böcke 34, 35, 36 sind ihrerseits auf den Stützen 20, 21 und 22 der Trommeln angebracht (wie in Fig.2 eingezeichnet). Der Bock 35 (Fig.4) ist dabei für die beiden Wellen 29 und 30 gemeinsam und seine Büchse 32 nimmt die Enden der Wellen 29 und 30 auf.

Über die Schraubenwindungen der Wellen 29 und 30 fahren mittels Gleitsteine 37 und 38 Lenker 39 und 40, das Kabel und den Schlauch auf den Trommeln unmittelbar verlegen. Die Teilung der Schraubenwindung auf der Welle 29 ist gleich dem Durchmesser des zu verlegenden Kabels 8 und auf der Welle 30 gleich dem des Schlauches 10.

Da die Trommeln 7 und 9 auf den gesonderten Wellen 18 und 19 gelagert sind, sind diese Wellen mit der Steuerwelle 6 kinematisch mit Möglichkeit verbunden, die Drehung auf die Trommeln 7 und 9 mit unterschiedlicher Drehzahl und unabhängig voneinander zu übertragen.

Auf der Steuerwelle 6 ist eine Reibvorrichtung zur Übertragung unabhängiger Drehung gelagert, die elektromagnetische Reibungskupplungen 41 (Fig.5), 42 und 43 zur Übertragung des Drehmomentes jeweils auf die Räder 2 des Geräteträgers 1, die Welle 18 der Trommel 7 und die Welle 19 der Trommel 9 enthalten. Die Kupplungshaben 44, 45 und 46 sitzen starr auf der Welle 6, während die Kupplungsscheiben mit auf der Welle 6 freisitzenden Nockenkettensternen 47, 48 und 49 verbunden sind. Die Nockenkettensterne 47 und 49 übertragen das Drehmoment mittels Kettentriebe 50 und 51 (Fig.2) auf die Trommelwellen 18 und 19. Die Elektromagnete 52 dieser Kupplungen sind an auf der Geräteträgerplattform 1 montierten Stützen 53 angebracht, durch welche die in Lagerungen 54 gelagerte Steuerwelle 6 hindurchgeführt ist.

Vom Getriebe 5 (Fig.2) wird das Drehmoment unmittelbar auf die Welle 6 ebenfalls über einen Kettentrieb 55 und einen Kettenstern 56 (Fig.5) übertragen.

Die Sprühvorrichtung 13 ist mit der hohlen Welle 19 der Trommel 9 über elektromagnetischen Ventile 57 verbunden, die mit der Einheit 14 und dem Fahrwerk des Geräteträgers 1 elektrisch verbunden und in einem das hohle Gehäuse 24 mit der Vorrichtung 13 verbindenden Stutzen 58 eingebaut sind.

Die kinematische Verbindung der Wellen 29 und 30 der Verlegeeinrichtungen 11 und 12 mit der Steuerwelle 6 und den Trommelwellen erfolgt über die Kettentriebe 50 und 51, welche die Kettensterne umschlingen, wie in Fig.1, 2 eingezeichnet.

Die Sprühvorrichtung 13 hat beliebige bekannte Konstruktion, die geeignet ist, die Behandlungsflüssigkeit in Treibhäusern zu versprühen.

Die Einheit 14 zur automatischen Steuerung ist ebenfalls nach einem bekannten Schema ausgebildet, die für in diesem Bereich tätige Fachleute offensichtlich ist und Bewegen und Stoppen des Geräteträgers sowie Ein- und Ausschalten der Sprühvorrichtung 13 oder weiterer auf dem Geräteträger montierbarer Vorrichtungen bewirkt.

Die erfindungsgemäße Anlage funktioniert folgenderweise.

Die Bedienungsperson der Anlage fährt sie am Griff 17 zum Einsatzort, stellt sie im Anfang der Standweite auf die Führungen, schließt das Kabel 8 und den Schlauch 10 an das elektrische Netz bzw. die Rohrleitung mit der Behandlungsflüssigkeit an, die im Treibhaus verlegt sind. Dann wird an der Einheit 14 zur automatischen Steuerung die gewünschte Betriebsweise eingegeben, wonach die Anlage ferngestartet wird.

Das Drehmoment wird von dem elektrischen Motor 4 über das Getriebe 5 auf die Steuerwelle 6 zur Verteilung des Drehmomentes an die Räder 2 und 3 sowie an die Wellen 18 und 19 der Trommeln 7 und 9 und die Wellen 29 und 30 der Einrichtungen 11 und 12 zum Verlegen des Kabels und des Schlauches übertragen.

Auf die Räder 2 und 3 wird das Drehmoment von der Welle 6 mittels der elektromagnetischen Kupplung 41 übertragen, die synchron mit der Spannungszuführung zum elektrischen Motor 4 ein- und bei dessen Stillsetzen ausgerückt wird.

Bei der Bewegung der Anlage ins Innere der Standweite sind die elektromagnetischen Kupplungen 42 und 43 ausgerückt und die Trommeln 7 und 9 haspeln sich unter Eigenspannung des Kabels und des Schlauches ab, deren Enden an das elektrische Netz und an die Rohrleitung mit der Behandlungsflüssigkeit im Anfang der Standweite angeschlossen sind. Die Trommelwellen drehen sich dabei in den Kugellagern frei. Die Bremseinrichtungen der Trommel wirken dabei auf das Aufheben der trägheitsbedingten Dreh-

...ng hin. Die Trommeln werden folgenderweise abgebremst.

Die Federn 27 drücken auf die Achsen 26, die die elastischen Rollen 25 gegen die Oberfläche der Trommel anpressen. Durch ihre Elastizität werden die Rollen an den Berührungsstellen mit den Oberflächen der Trommel verformt und gequetscht. Die Drehung der Trommeln ruft die Drehung der Rollen 25 hervor, wobei sich die Verformungsbereiche der Rollen an der Außenfläche derselben stets bewegen. Wird die Anlage zufällig gestoppt oder ihre Fahrgeschwindigkeit kurzzeitig verändert, nimmt die Spannung des Kabels und des Schlauches ab, und die elastischen Rollen bremsen die Trommeln ab, indem sie ihre trägheitsbedingte Drehung verhindern. Durch die in den Rollen vorhandenen Poren, die an den Berührungsstellen mit den Oberflächen der Trommeln auch verformt werden, wird die Bremswirkung der Rollen begünstigt.

Durch die Lagerung der Trommeln auf den gesonderten Wellen werden das Kabel und der Schlauch von diesen abgehaspelt, ohne einander zu stören, wobei ihre Drehgeschwindigkeiten (Drehzahl) unterschiedlich sind, was es erlaubt, die unterschiedlichen Durchmesser des Kabels und des Schlauches und die Anzahl ihrer Lagen auf den Trommeln zu berücksichtigen.

Die Behandlungsflüssigkeit wird über den Schlauch 10 in die hohle Welle 19 der Trommel 9, dann dem Gehäuse 24 und weiter den elektromagnetischen Ventilen 57 zugeführt, die eingeschaltet werden können und die Flüssigkeit zur Sprühvorrichtung 13 durchlassen können nur wenn die Anlage fährt, d.h. synchron zur Einschaltung des elektrischen Motors 4.

Bei der Fahrt der Anlage ins Innere der Standweite werden die Pflanzen mittels der Sprühvorrichtung 13 behandelt. Ist das Ende der Standweite erreicht, wird die Fahrtrichtung des Geräteträgers durch Ansprechen des Endschalters 15 umgekehrt, der ein Signal an die Einheit 14 liefert, während diese ihrerseits den elektrischen Motor 4 umsteuert. Gleichzeitig mit dem Umsteuern des elekt-

- 11 -

rischen Motors 4 werden die elektromagnetischen Kupplungen 42 und 43 eingerückt, die zur Übertragung des Drehmomentes von der Welle 6 auf die Wellen der Trommeln und der Verlegeeinrichtungen übergehen. Die Trommeln 7 und 9 beginnen, das Kabel bzw. den Schlauch auf sich aufzuwickeln, während die Einrichtungen 11 und 12 diese in gleichmäßigen Reihen verlegen. Durch die Lagerung der Trommeln auf den gesonderten Wellen sowie die gegenseitig unabhängige Wellendrehung der Verlegeeinrichtungen stören dabei das Kabel und der Schlauch beim Aufwickeln einander wieder nicht.

Bei der Rückfahrt in die Ausgangsstellung werden je nach der eingegebenen Betriebsweise entweder die Pflanzen mit der Flüssigkeit weiterbehandelt oder die Anlage fährt "im Leerlauf". Dabei sind die elektromagnetischen Ventile 57 demnach auch entweder eingeschaltet und lassen die Flüssigkeit zur Vorrichtung 13 durch, oder sie sind ausgeschaltet.

Ist die Ausgangsstellung im Anfang der Standweite erreicht, wird der Geräteträger durch Ansprechen des Endschalters 16 selbsttätig gestoppt, der ein Signal an die Einheit 14 liefert, während diese ihrerseits den elektrischen Motor 4 und die elektromagnetischen Ventile 57 abschaltet, falls die letzteren eingeschaltet waren.

Steht die Anlage still und ist der Betrieb eingestellt, fährt die Bedienungsperson die Anlage in die benachbarte Standweite und der Arbeitszyklus wiederholt sich usw.

Durch die vorstehend geschilderte konstruktive Ausführung der Anlage wird im Vergleich zur bekannten die Betriebszuverlässigkeit sämtlicher Baugruppen und somit die Zuverlässigkeit bei der Ausführung des technologischen Prozesses wesentlich erhöht. Die Arbeitsleistung nimmt auch wesentlich zu. Zugleich werden die Abmessungen, der Metallaufwand für die Konstruktion und somit ihre Kosten wesentlich verringert.

- 12 -

Gewerbliche Verwertbarkeit

Die erfindungsgemäße Anlage ist mit dem größten Effekt in Block-Treibhänsern anwendbar, die mit einem elektrischen Netz und einem Zentralsystem zur Aufbereitung und Zuführung der Behandlungsflüssigkeit zum Einsatzart der Anlage ausgerüstet sind.

PATENTANSPRÜCHE

1. Anlage zur Behandlung von Spalierpflanzen in Block-Treibhäusern, die einen in den Standweiten auf Führungen bewegbaren Geräteträger mit einem elektrischen Antrieb (4) und einer Steuerwelle (6) und auf dessen Bühne (1) montiert eine Sprühvorrichtung (13), Trommeln (7 und 9) mit einem elektrischen Speisekabel (8) bzw. einem Schlauch (10) für die Behandlungsflüssigkeit, Einrichtungen (11 und 12) zum Verlegen des Kabels (8) und des Schlauches (10) auf den jeweiligen Trommeln und eine Einheit (14) zur automatischen Steuerung der Geräteträgerfahrt und der Arbeit der Sprühvorrichtung (13) enthält, dadurch g e k e n n z e i c h n e t , daß die Trommeln (7 und 9) auf gesonderten Wellen (18 bzw. 19) gelagert sind, die mit der Steuerwelle (6) nach Möglichkeit kinematisch verbunden sind, die Drehung auf die Trommeln (7 und 9) mit unterschiedlicher Drehzahl und unabhängig voneinander zu übertragen, wobei die Einrichtungen (11 und 12) zum Verlegen des Kabels (8) und des Schlauches (10) mit der Steuerwelle (6) kinematisch verbunden und so ausgebildet sind, daß ihre Wellen (29 und 30) synchron mitd dem Umlauf der jeweiligen Trommeln drehbar sind.

2. Anlage nach Anspruch 1, dadurch g e k e n n - z e i c h n e t , daß die Steuerwelle (6) mit einer Reibvorrichtung zur Übertragung unabhängiger Drehung auf die Trommeln versehen ist, die elektromagnetische Reibungskupplungen (42 und 43) enthält, bei jeder von denen die Nabe an der Welle (6) befestigt ist, während die Scheiben mittels eines Nockenkettensternes (47 und 49) und eines Kettentriebes mit den Wellen der jeweiligen Trommel (7, 9) bzw. Verlegeeinrichtung (11, 12) verbunden sind.

3. Anlage nach Anspruch 1, dadurch g e k e n n - z e i c h n e t , daß die Wellen (29 und 30) der Verlegeeinrichtungen mittels Büchsen (31, 32, 33) und Böcke (34, 35, 36) auf den Stützen (20, 21, 22) der Wellen der Trommeln (7 und 9) montiert sind.

4. Anlage nach Anspruch 1, dadurch g e k e n n -
z e i c h n e t , daß jede der Trommeln (7 und 9) mit
einer Bremseinrichtung versehen ist, die als elastische
Rolle (25) ausgebildet ist, welche mit der Oberfläche
der Trommel in Berührung steht und auf einer an der
Wellenstütze dieser Trommel befestigten, zur Trommel
hin abgefederten Achse (26) drehbar befestigt ist, wobei
die elastische Rolle (25) aus porösem Gummi besteht.

00292561

FIG.1

FIG.2

FIG.3

EPAC-36671.2

EPAC-36671.2

FIG.5

FIG.4

07902863.6                                              00-7

# INTERNATIONAL SEARCH REPORT

00292561

International Application No PCT/SU 87/00015

## I. CLASSIFICATION OF SUBJECT MATTER (if several classification symbols apply, indicate all) *

According to International Patent Classification (IPC) or to both National Classification and IPC

IPC$^4$ — A 01 M 7/00

## II. FIELDS SEARCHED

| Minimum Documentation Searched † | |
|---|---|
| Classification System | Classification Symbols |
| IPC$^4$ | A 01 M 7/00, B 66 D 1/26 |

Documentation Searched other than Minimum Documentation
to the Extent that such Documents are Included in the Fields Searched *

## III. DOCUMENTS CONSIDERED TO BE RELEVANT *

| Category * | Citation of Document, ¹¹ with Indication, where appropriate, of the relevant passages ¹² | Relevant to Claim No. ¹³ |
|---|---|---|
| A | SU, A1, 55745 (P.I. Grekov),30 September 1939 (30.09.39), see the claims, figure 1 | 1 |
| A | SU, A1, 1187887, (Vsesojuzny ordena Trudovogo Krasnogo Znameni nauchno-issledovatelsky institut selskokchozyaistvennogo mashino-stroenia im.V.P. Goryachkina) 30 October 1985 (30.10.85) see the claims, the drawing | 1 |
| A | Trudy Vsesojuznogo selskokhozyaistvennogo instituta zaochnago obrazovania "Avtomatizatsia tekhnologicheskikh protsessov vozdelyvania ovoschnykh kultur v zaschischennom grunte", vypusk 144, 1977, VSKHIZO (Moscow), M. A. Galkin "K voprosu avtomatizatsü protsessa opryskivania shpalernykh kultur v blochnykh teplitsakh", see pages 81-84 | 1 |
| A | DE, B2, 2237343 , (Potain S.A.) 19 June 1975 (19.06.75) see figure 1 | 1 |

-----------

* Special categories of cited documents: ¹⁰

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 28 May 1987 (28.05.87) | 03 July 1987 (03.07.87) |
| International Searching Authority | Signature of Authorized Officer |
| ISA/SU | |

Form PCT/ISA/210 (second sheet) (January 1985)